(19) **Europäisches Patentamt / European Patent Office / Office européen des brevets**

(11) **EP 3 537 775 B1**

(12) **EUROPEAN PATENT SPECIFICATION**

(45) Date of publication and mention
of the grant of the patent:
**15.04.2020  Bulletin 2020/16**

(51) Int Cl.:
***H04W 52/02*** *(2009.01)*

(21) Application number: **18305255.4**

(22) Date of filing: **09.03.2018**

(54) **MULTIPLE ACCESS PROTOCOL FOR ULTRALOW POWERED DEVICES**

MEHRFACHZUGRIFFSPROTOKOLL FÜR SEHR STROMSPARENDE VORRICHTUNGEN

PROTOCOLE D'ACCÈS MULTIPLE POUR DISPOSITIFS À CONSOMMATION D'ÉNERGIE ULTRA BASSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.09.2019  Bulletin 2019/37**

(73) Proprietors:
• **Mitsubishi Electric R&D Centre Europe B.V.**
**1119 NS  Schiphol Rijk Amsterdam (NL)**
Designated Contracting States:
**FR**
• **Mitsubishi Electric Corporation**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventor: **ROLLET, Romain**
**35000 Rennes (FR)**

(74) Representative: **Plasseraud IP**
**66, rue de la Chaussée d'Antin**
**75440 Paris Cedex 09 (FR)**

(56) References cited:
**US-A1- 2010 097 969     US-A1- 2011 182 248**
**US-A1- 2014 112 405**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention is related to operation optimization of communicating devices (such as connected sensors) for minimizing the power consumption of such devices.

In a radio communication system, one of the main tasks of the Medium Access Control (MAC) layer is to provide channel access control mechanisms in order to share the available radio resource between the different devices (also called "stations" hereafter) that need to communicate.

In a packet-mode contention based channel access, the multiple access mechanism is able to detect and reduce data packet collisions.

On the contrary, in a circuit-switched channel access method, the multiple access mechanisms reserve some resource to establish a logical channel.

Usually, the multiple access mechanism is associated with error control mechanism used to control packet repetition in order to achieve a minimum Quality of Service (QoS) for each established channel. Optimising the global available bandwidth is also one of the main target of the multiple access mechanism. Examples of multiple access protocols that are used in packet radio wireless networks are CSMA/CA (used in 802.11 networks), Slotted ALOHA, Dynamic TDMA, Mobile Slotted Aloha, CDMA.

TDMA allows several users to share the same frequency channel by dividing the signal into different timeslots. Slots are allocated to a particular device avoiding any radio collision in the cell. A major advantage of TDMA is that the radio part of the mobile only needs to listen and broadcast for its own timeslot. Time is usually divided in fixed-duration time frames, each frame being divided into a fix number of slots. A central controller named access point, or base station in some standards, is in charge of sharing the bandwidth among the different devices that need to communicate. Some timeslots are then granted to each device, each timeslot being dedicated to the communication of the device. Usually timeslots are periodically allocated, and organised in consecutive time super-frame.

In dynamic TDMA, a scheduling algorithm dynamically reserves a variable number of timeslots in each super-frame to some variable bit-rate data streams, based on the traffic demand of each data stream. Then, the central controller order the different allocated timeslot into the super-frame in order to optimize bandwidth (reducing inter-slot times and signalling data) and the devices power consumption. To that end, signalling information is inserted at the beginning of each super-frame in order to indicate to each device the amount of allocated timeslots and their position (i.e. time offset).

In CSMA/CA, no central scheduling is required since each station decides whether it can transmit data over the channel. A Carrier Sense mechanism is used prior to transmitting to detect channel occupancy. When another station is heard, a Collision Avoidance determines the waiting period before listening again for a free communication channel. One drawback of this method is the necessity for the receiver station to listen permanently the channel, which has the high power consumption cost. For this reason, power saving algorithms have been developed to reduce power consumption. Most of them are based on the introduction of time frame of fixed duration signalled by a specific broadcast beacon frame emitted by a central controller. Only communication between the central controller and stations are allowed (i.e. infrastructure mode in 802.11). Then, stations are awoken only during some specific time frame. Central controller schedules the downlink traffic only during time frame where the destination station is awoken. However, this kind of mechanism requires the station to be awoken and to listen to the channel during one complete time frame instead of one slot in TDMA.

New hardware radio modules implement now very efficient sleeping modes that allow reducing the power consumption to several micro amperes. But putting microprocessor in active or sleeping modes still requires more power (several mA for low power devices). Considering the radio module, data reception and above all data transmission always require also more power (~5-20mA) for on-the-shelf integrated radio system-on-chip.

Transitions between power saving and actives modes require generally some delay because of hardware and software constraints. Then, those behaviours induce some overhead in term of power consumption and they shall be considered when designing a multiple access protocol which is not the case of existing methods.

Because of their very low power consumption, such communication modules can be coupled with energy harvesting power supply. Energy harvesting is the process that consists in collecting ambient energy (such as thermal energy, solar energy, wind energy and so on). The energy is drawn from the environment, converted and stored in a small battery or a capacitor, in order to provide energy to the microcontroller unit.

Harvesting RF energy is particularly advantageous in a communication system since it can be used to feed every wireless communication devices in a cell. Using dedicated source of RF energy allows to control the power supply of each devices. The Medium Access Control layer shall then take in charge the scheduling of burst of energy to power the wireless devices. It will depend on the multiple access protocol and the allocated radio resources.

One problem to be addressed by the invention can be defined as follows.

In a communication system dedicated to ultralow powered devices, the centralized multiple access control mechanism running in the central controller must be able to take into account not only the traffic requirement but also the energy constraints of each device in the cell in order to share the radio bandwidth. Indeed, the different wireless devices may have some heterogeneous needs because of their application requirement, their localization, and their hardware constraints.

Existing scheduling schemes used for resource sharing only consider whether a device is wake-up or sleeping. However, it can be considered a network system where the power supply of the wireless devices may use a Radio Frequency (RF) harvesting process with a dedicated RF source collocated in and controlled by the central controller to feed in power the connected devices. Then, there is a need for a centralized multiple access control mechanism that optimizes the slot allocation process and is able to schedule some bursts of energy to feed the wireless devices. This ensures the wireless network system is able to respect the traffic requirements, meaning the associated QoS of applications that run over the wireless devices.

The prior art documents US 2014/112405 A1, US 2010/097969 A1 and US 2011/182248 A1 disclose scheduling methods for multiple communication devices, each having an individual maximum time offset before they need to be scheduled, wherein the scheduling methods take into account each device's maximum time offset and aim to find an optimal solution.

The proposed multiple access control method based on centralized TDMA is in charge of the following tasks:

- Schedule some resource timeslots for each device using well-known algorithms such as Weighted Fair Queuing, Weighted Round Robin, etc. For simple device such as sensor which needs to periodically report some measurements, a periodic and static allocation may be sufficient. In order to achieve an efficient bandwidth allocation, timeslots must be allocated only if the device has enough energy to transmit safely one or more data packets.
- Evaluate the level of energy in the managed wireless devices
- Optimize the order of the allocated slots within the super-frame to optimize the energy usage in the wireless devices. For devices with the most stringent energy constraints, the target is to minimize the waiting time between the beginning of the super-frame and the allocated slot position where the devices may receive or transmit data emission.
- Efficiently schedule some bursts of energy taking into account energy requirements of the different communicating devices. Burst of energy are received by all devices, and are used to load device batteries. The duration of energy burst shall be minimized since they shall respect the Radio-Frequency regulation, and minimize the interference with other system running in the same frequency band.

The goal of the invention is to get a trade-off between the global bandwidth, the radio interferences, and the QoS requirements of the different wireless devices taking into account the energy constraints linked to the RF energy harvesting process that is used to power some of the wireless devices.

The invention aims to improve the situation, compared to the state of the art scheduling methods that only take traffic requirements as input.

To that end, it proposes a method implemented by computer means for scheduling at least data communication in a system comprising:

- communicating devices (D#0, D#1, ... , D#n), each device having a power battery and being configured for:

    o awaking in view to receive/transmit data within a predefined timeslot dedicated to said each device, and
    o then going to a sleep mode so as to save battery power,

- and a cell controller (CC) being configured for transmitting repetitively a beacon to the communicating devices to announce to the devices whether future timeslots are intended or not to be allocated to said devices, and eventually moments when said future timeslots are scheduled to be allocated.

More particularly, each of said devices is further configured for waking up and being active to receive the beacon, and then:

- go to a sleep mode if no dedicated timeslot is available for said device before a next beacon, or
- in the event when a dedicated timeslot is available for said device before a next beacon:

    o stay active to use said dedicated timeslot, or
    o go to a sleep mode until the moment when the dedicated timeslot is to be allocated.

It should be understood thus that the cell controller is configured for scheduling timeslots to be allocated to devices and possibly for scheduling further durations of energy bursts to provide to devices so as to load their power batteries, like presented in a particular embodiment described below.

Concerning the timeslots, the cell controller can determine the duration of the timeslots but further the time offset between the beginning of the beacon and the moment when a device can use its dedicated timeslot (i.e. the position of that timeslot in the super-frame presented above).

According to the invention, the cell controller, before sending a current beacon, is further configured for performing the following:

a) calculate, for each device intended to have a dedicated timeslot indicated in said current beacon, a maximum time offset $Max(t_{off,n})$ supported by the device, which takes into account the energy consumption due to go-to-sleep and wake-up phases of the device until the moment when the device can use its dedicated timeslot,

b) rank and store in a memory a first list of devices intended to have a dedicated timeslot indicated in the current beacon, according to their maximum supported time offset $Max(t_{off,n})$, the last device (D#n) of the list having the higher maximum supported time offset $Max(t_{off,n})$,

c) pick a considered device which is at the head of said first list and insert it at the end of said first list, and calculate, at least for said considered device, a time offset $t_{off,n}$ between a moment when said current beacon is scheduled to be transmitted and the moment when the timeslot dedicated to the considered device is to be allocated,

d) determine, at least for said considered device, whether the time offset $t_{off,n}$ is greater than the maximum supported time offset $Max(t_{off,n})$ of the considered device, and if yes:

    i. move said considered device (D#n) upper in the first list,

    ii. determine a new time offset $t_{off,n}$ for said considered device, and repeat operation d) until the time offset $t_{off,n}$ is not greater than the maximum supported time offset $Max(t_{off,n})$ of the considered device,

e) store in a memory a second list of devices comprising said considered device having a new list position and said new time offset $t_{off,n}$, and modify (i.e. update before its broadcast) said current beacon according to the second list so as to allocate at least a dedicated timeslot to said considered device at said new time offset $t_{off,n}$.

Therefore, thanks to that new calculation of time offset and taking into account the maximum the device can support, an optimized timeslot allocation (and in particular time offset) is performed and makes it possible to save more energy for the communicating devices.

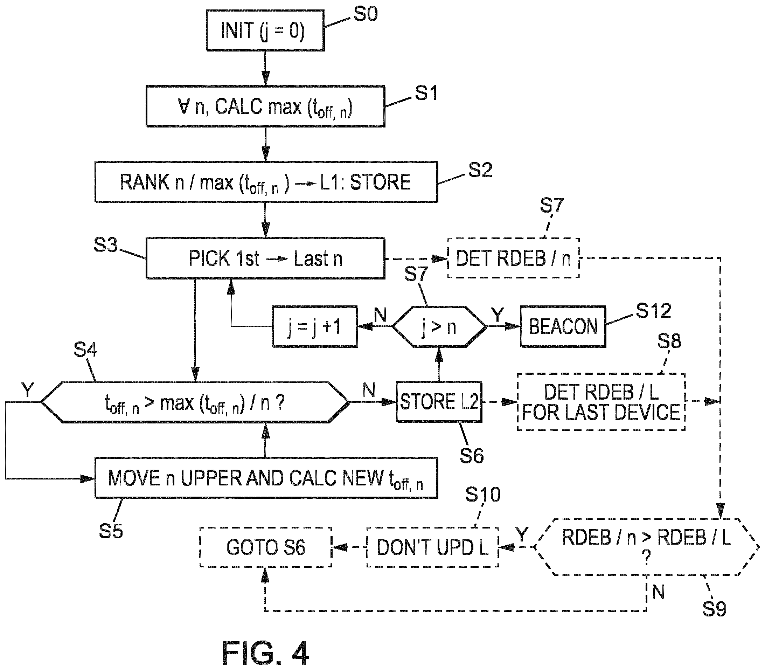

In a particular embodiment (described below as step S7 of figure 4), the cell controller:

- repeats operations c) and d), the second list of operation d) becoming the first list of operation c), until the second list does not comprise any device for which the time offset $t_{off,n}$ is greater than the maximum supported time offset $Max(t_{off,n})$,
- and updates in operation e) the current beacon according to the second list (L2) so as to allocate dedicated timeslots to said devices of the second list at respective updated time offsets $t_{off,n}$.

In an embodiment, the maximum supported time offset for a device is given by:

$$Max(t_{off,n}) = (E_{0,n} - E_{sf,n}(0)) / P_A,$$

where:

- $E_{0,n}$ is a sensed level of available energy (or can be derived from a battery load measurement with a sensor) for the device before the start of the beacon broadcast,
- $E_{sf,n}(0)$ is an estimated level of consumed energy by the device to:

    - wake up,
    - receive the beacon,
    - receive and/or transmit data during the dedicated timeslot, and
    - go then to sleep until the next beacon,

- and $P_A$ is a consumed energy during active phases.

In this embodiment, the estimated level of consumed energy by the device can be given by:

$$E_{sf,n}(0) = P_{Rx}*(T_{Beacon} + T_{Rx,n}) + P_{Tx}*T_{Tx,n} + P_A*(T_{GS})$$

Where:

- $P_{Rx}$ is the power consumption during the reception phase
- $P_{Tx}$ is the power consumption during the transmission phase
- $T_{Beacon}$ is the duration of the beacon
- $T_{Rx,n}$ is the duration of possible data reception by the device during its dedicated timeslot
- $T_{Tx,n}$ is the duration of possible data transmission by the device during its dedicated timeslot
- $T_{GS}$ is the time taken by the device to go to sleep and corresponds to a fixed duration.

Furthermore, a time $T_{Dec}$ taken by the device to decode the beacon can be further taken into account and the estimated level of consumed energy by the device can be given by:

$$E_{sf,n}(0) = P_{Rx}*(T_{Beacon} + T_{Rx,n}) + P_{Tx}*T_{Tx,n} + P_A*(T_{Dec} + T_{GS})$$

The cell controller can be configured further to take into account, at least when allocating a new time offset $t_{off,n}$, an extra energy cost due to insertion of a sleeping period between the beacon broadcast and the moment when the device receives its dedicated timeslot, said extra energy cost being estimated by:
$P_A*(T_{GS}+T_{WU}+T_{PreTS} - t_{off,n})$ with $t_{off,n} < T_{GS}+T_{WU}+T_{PreTS}$, and where:

- $T_{WU}$ is a time taken by the device to wake up and corresponds to a fixed duration,
- $T_{PreTS}$ is an optional time margin taken by the device before starting to use the timeslot and corresponds to a fixed duration.

The cell controller can be configured further to calculate an estimated energy consumed by the device according to its time offset $t_{off,n}$:

$$E_{sf,n}(t_{off,n}) = P_{Rx}*(T_{Beacon} + T_{Rx,n}) + P_{Tx}*T_{Tx,n} + P_A*(T_{Dec} + T_{GS}) + P_A * \min(t_{off,n}, T_{GS}+T_{WU}+T_{PreTS})$$

$$= E_{sf,n}(0) + P_A * \min(t_{off,n}, T_{GS}+T_{WU}+T_{PreTS})$$

with

$$E_{sf,n}(0) = P_{Rx}*(T_{Beacon} + T_{Rx,n}) + P_{Tx}*T_{Tx,n} + P_A*(T_{Dec} + T_{GS})$$

In a particular embodiment of the invention taking further into account energy burst durations to provide to devices, the cell controller is configured further to schedule energy burst transmissions to devices needing an energy battery load, and the cell controller:

* performs for said considered device of operation d):

- a calculation of a first requested duration of energy burst so that the considered device is able to use the timeslot scheduled at time offset $t_{off,n}$, and

- a determination of whether the time offset $t_{off,n}$ is greater than the maximum supported time offset $\text{Max}(t_{off,n})$ of the considered device, and if yes, moving said considered device upper in the first list, and determining a new time offset $t_{off,n}$ for said considered device, and storing in a memory the second list of devices comprising said considered device having a new list position and said new time offset $t_{off,n}$ ,

* performs for the last device of the second list:

- a calculation of a second requested duration of energy burst so that said last device is able to use a timeslot scheduled at a time offset defined according to the second list,

\* and:

- if the first requested duration of energy burst is higher than or equal to the second requested duration of energy burst, updates the current beacon according to the second list,

- or uses the first list otherwise.

In this embodiment, the cell controller can further update the scheduled duration of energy burst to fit the power need of:

- the considered device if the first list is used, or

- the last device if the second list is used.

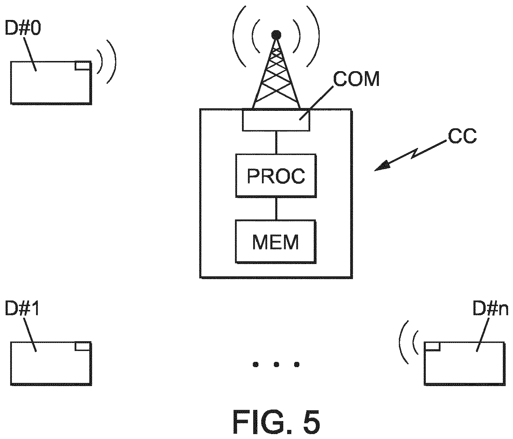

The present invention aims at a cell controller (CC) comprising a processing circuit for performing the method presented above and an example of which is shown in figure 5 commented below.

The present invention aims also at a computer program product, comprising instructions for performing the method as defined above, when run by a processor. A general algorithm of such a computer program can be illustrated by way of an example by the flowchart corresponding to figure 4 commented below.

More generally, the present invention is illustrated by way of example, and not by way of limitation, in the figures of the accompanying drawings, in which like reference numerals refer to similar elements and in which:

- Figure 1 shows energy burst scheduling and beacons starting at successive super-frames, received on an announcement channel and indicating data scheduling ,

- Figure 2 illustrates the scheme of the energy evaluation for a single device in a communicating system,

- Figure 3 illustrates the different phases (sleeping, wake up, active, go to sleep) for two devices having different respective time offsets before receiving their timeslot,

- Figure 4 shows an exemplary embodiment of successive steps of an algorithm to perform a method according to the invention,

- Figure 5 shows schematically a communication system having battery powered communicating devices and a cell controller to perform the method of the invention.

The invention proposes a multiple access protocol implementation that is adapted to a radio communication system with ultralow powered devices.

A Central Controller (labelled "CC" in figure 5) is in charge of sharing the radio bandwidth among wireless devices (D#0, D#1, ..., D#n) by implementing a multiple access control method based on a centralized TDMA scheme.

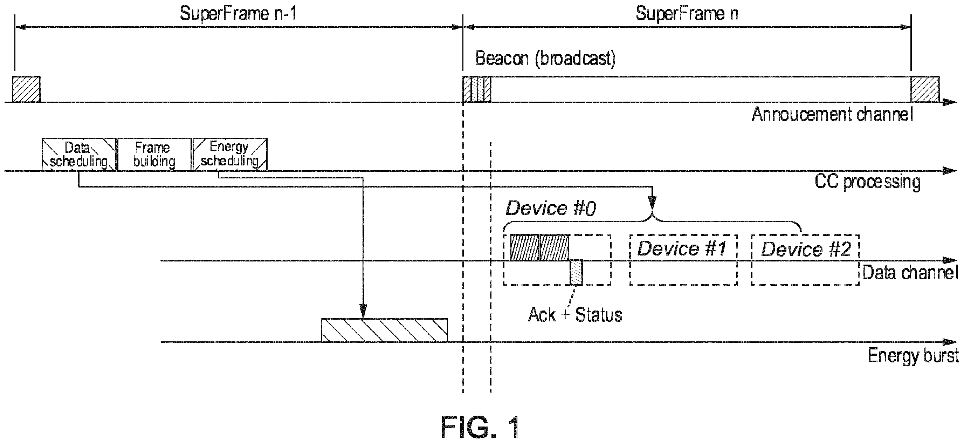

As shown in figure 1, time is divided in super-frames. Each super-frame starts with a broadcast beacon frame carrying information about the super-frame composition (i.e. the order, position and duration of allocated timeslots in the super-frame).

Each wireless device may have different traffic requirements and it is supposed they are able to communicate their need by using signalling data. As introduced above, before each super-frame, the cell controller CC runs scheduling algorithms to determine the amount of granted resource in the super-frame for each wake-up device.

Wireless devices also periodically report their battery/capacitor status as well as the received signal strength by using a piggybacking mechanism (signalling part). Thanks to that information, the cell controller CC is able to evaluate the evolution of the level of energy in each device.

The cell controller CC must execute the data scheduling, super-frame building and energy scheduling processes at the beginning of the preceding super-frame, so that it shall have time to potentially send some burst of energy to some requesting wireless devices.

Figure 1 illustrates super-frames, received on an announcement channel and indicating:

- Data scheduling allowing devices (here #0, #1 and #2 in the shown example) to receive/transmit data on a data channel,

- Energy burst scheduling to transmit energy to any needing device.

The following relates to power consumption prediction.

To be able to efficiently predict the energy consumed by any device, the CC must know some static parameters that are dependent on the type of hardware device such as:

- Time to wake
- Time to go sleeping
- Power consumption while:

  o Sleeping
  o Active
  o Transmitting data
  o Receiving data

Power supply of the wireless devices may use a RF harvesting process with a dedicated RF source collocated in and controlled by the central controller. Consequently, for each device, the centralized multiple access control mechanism must also have knowledge of some static parameters related to energy such as:

- Power conversion efficiency ratio (which part of the available power the energy harvesting module is able to gather)

Some energy indicators are also defined to model and predict the power consumption of a device. The following parameters are permanently changing and shall be measured and reported by the device:

- Received Signal Strength Indicator (RSSI) of RF energy bursts
- Battery/capacitor level

The cell controller (named "CC" hereafter) controls the duration and the transmission power of energy bursts. Knowing the path loss (derived from the RSSI), and the power conversion efficiency ratio, the CC is able to calculate the amount of energy gathered by each device during the emission of an energy burst. In the reverse way, it can evaluate precisely the amount of energy the device will consume during the sleep, active, Reception (Rx) and Transmission (Tx) periods by simply multiplying the respective reference power values with the duration of these periods. After the reception of a data packet, the evaluated battery value is reset with the measured value indicated in said packet. The difference is used to calculate the error margin that is used to calculate a timeslot duration.

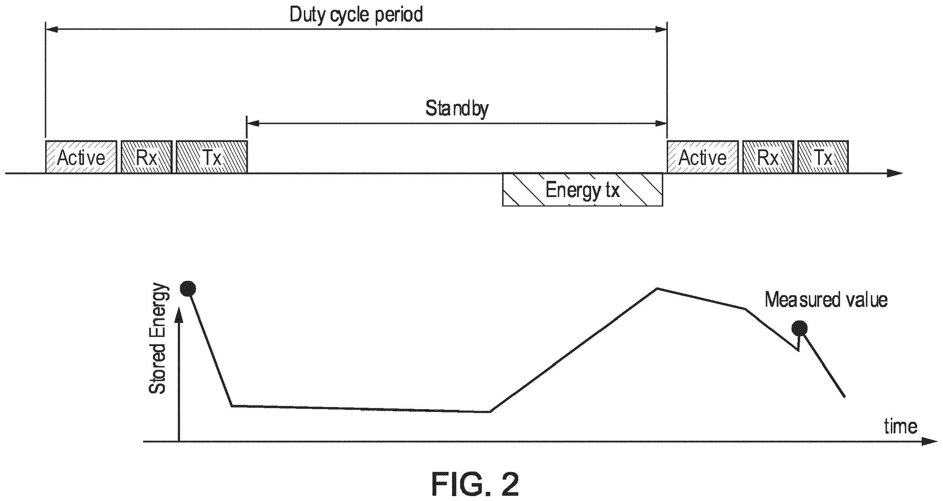

Figure 2 illustrates the scheme of the energy evaluation for a single device. It can be observed that during the active phase (Rx, Tx) the energy of the device lowers until a standby phase having a neglectable consumption. When the device receives then the energy burst, its stored energy increases.

More particularly here, the evaluated value of the stored energy is synchronised with the measured value upon reception of a valid packet in the CC. Error in the evaluation can be due to a bad estimation of the average RSSI or the power conversion efficiency ratio.

The following is related to slot ordering and super-frame building.

At the beginning of the super-frame, the beacon frame is broadcast over an "announcement channel" to every attached device. Each awaken device shall be ready to receive it, meaning that it shall be wakeup a minimum amount of time $t_{prerx}$ before the beginning of the beacon. So, the device can be considered to be active during $t_{wakeup} + t_{prerx}$ before the reception of the beacon.

As mentioned before, the beacon contains some signalling data that can be decoded so that each active device can identify its allocated timeslot (time offset and duration) within the super frame. During this decoding phase, the device is active. Then, depending on the timeslot position, the device may either go to sleep or stay active, waiting for its dedicated timeslot. The minimum time for sleeping is equal to the sum of $T_{wakeup} + T_{gotosleep}$.

If the waiting time is lower than this value, then the device must stay active because it will not have enough time to go to sleep and wake up. On the contrary, knowing that the power consumption is more or less identical for the wakeup, "go to sleep" and active phases, it is preferable that a device starts a go-to-sleep procedure in order to benefit from the ultra-low power consumption of the deep sleep modes that are now available on many chipsets.

Consequently, the cell controller CC can estimate the energy overhead implied by entering/exiting the deep sleep mode.

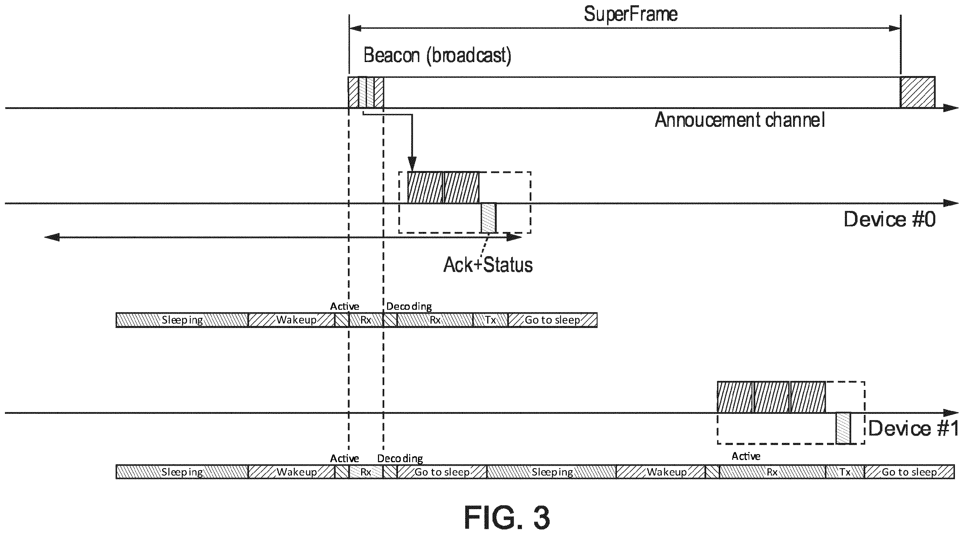

Figure 3 illustrates the different phases for two devices. The first device #0 has its timeslot scheduled just after the beacon, while the second device #1 has enough time to go to the deep sleep mode between the end of the beacon reception and its allocated timeslot.

It must be noticed that the energy cost of the usage of a given timeslot can also be evaluated by the cell controller CC when building the structure of the next super-frame.

In order to fulfil the scheduling requirements, the goal of the super-frame building algorithm is to order the timeslots so that every device has a positive energy level after the timeslot emission.

Consequently, for each device, it is possible to calculate the maximum time offset it is able to support, this time offset being related to the sum of the go-to-sleep and wake-up phase durations. The cell controller CC can then order the scheduled devices (i.e. which have scheduled resource) in the current super-frame according to this value.

As input of the algorithm which will be described hereafter with reference to figure 4, the following data can be provided:

- $P_A$: Power consumption during the Active phase
- $P_{Rx}$: Power consumption during the reception phase
- $P_{Tx}$: Power consumption during the transmission phase
- $T_{Beacon}$: Duration of the broadcast beacon frame
- $t_{off,n}$: Time offset between beacon and timeslot dedicated to device n
- $T_{Rx,n}$: Duration of the reception burst of device n
- $T_{Tx,n}$: Duration of the transmission burst of device n
- $T_{GS}$: Go to sleep duration (fixed)
- $T_{WU}$: Wake up duration (fixed)
- $T_{PreTS}$: Time margin before the timeslot (optional and fixed)
- $T_{Dec}$: Time taken by a device to decode the beacon (optional and approximatively fixed)

For a device scheduled shortly after the beacon (a device having the index #0 below), the energy cost expended during one super-frame is:

$$E_{sf,0}=P_{Rx}*(T_{Beacon}+T_{Rx,0})+P_{Tx}*T_{Tx,0}+P_A*(T_{Dec}+T_{GS}+t_{off,0}) \text{ with } T_{Tx,0}+T_{Rx,0}<T_{TimeSlot0}$$

As indicated above, duration $T_{Dec}$ is optional and can be taken into account in a sophisticated embodiment.

Furthermore, duration $T_{Rx,0}$ is to be considered as optional as well, especially if no data is to be expected in reception for device #0. For a similar reason, if no data is to be expected in transmission for device #0, duration $T_{Tx,0}$ can be considered as optional as well. However, it is to be noticed that if there is no data to receive/transmit for device #0, then, device #0 should be in a sleep mode.

It should be noticed further that duration $T_{GS}$ is duly taken into account here.

For a device scheduled after a long time (a device having an index "1" in the equation given below and as illustrated in Figure 3):

$$E_{sf,1}=P_{Rx}*(T_{Beacon}+T_{Rx,1})+P_{Tx}*T_{Tx,1}+P_A*(T_{Dec}+T_{PreTS}+2*T_{GS}+T_{WU}) \text{ with } T_{Rx,1}+T_{Tx,1}<T_{TimeSlot1}$$

with durations $T_{PreTS}$ and $T_{Dec}$ optional and which can be taken into account in sophisticated embodiments.

It shall be noticed further that the sleeping power consumption is negligible compared to any other power consumption, so it is not considered in this energy calculation.

Extra energy cost due to insertion of a sleeping period is then equal to:

$P_A*(T_{GS}+T_{WU}+T_{PreTS}-t_{off,n})$ with $t_{off,n}<T_{GS}+T_{WU}+T_{PreTS}$.

Consequently, the energy consumed by the device n according to the time offset can be estimated to:

$$E_{sf,n}(t_{off,n})=P_{Rx}*(T_{Beacon}+T_{Rx,n})+P_{Tx}*T_{Tx,n}+P_A*(T_{Dec}+T_{GS})+P_A*\min(t_{off,n},T_{GS}+T_{WU}+T_{PreTS})=$$

$$E_{sf,n}(0)+P_A*\min(t_{off,n},T_{GS}+T_{WU}+T_{PreTS})$$

with

$$E_{sf,n}(0)=P_{Rx}*(T_{Beacon}+T_{Rx,n})+P_{Tx}*T_{Tx,n}+P_A*(T_{Dec}+T_{GS})$$

Then it comes the maximum supported time offset for device #n is:

$$Max(t_{off,n}) = (E_{0,n} - E_{sf,n}(0)) / P_A$$

with $E_{0,n}$ the estimated level of available energy for device n before the start of the super-frame.

Taking this result, the method, the steps of which are proposed in the description of figure 4 below, optimizes then the location of timeslots within the super-frame, so that devices with stringent energy constraints (i.e. lowest maximum time offset) have their allocated timeslots located close to the beacon frame, and are able to communicate first.

In other words, the cell controller CC shall then order the scheduled devices (i.e. which have scheduled resource) in the current super-frame according to their maximum supported time offset.

Namely, the method can be applied for devices with same or similar level of priority in order to decide the ordering of allocated timeslots within the next super-frame.

S being the set of devices to be scheduled during the super-frame, for each device of S is given the duration of the scheduled timeslot ($T_{Rx,n} + T_{Tx,n}$) and the maximum supported time offset $Max(t_{off,n})$. A classification table is defined, and empty at the beginning of the ordering process at step S0 of figure 4.

In step S1, the maximum supported time offset $Max(t_{off,n})$ is determined for each device #n aimed in a next beacon and in step S2, the devices are ranked in a list L1 according to their maximum supported time offset $Max(t_{off,n})$ and this list L1 is stored.

In step S3, the first device of the list L1 is picked and put at the end of the list as the last device of the list. Said in other words, the device with the lowest maximum supported time offset $Max(t_{off,n})$, called previously the "considered device", is drawn from the head of the list and inserted in the classification list L1 at its end.

In step S4, the time offset $t_{off,n}$ of that considered device is calculated and if it is greater than its maximum supported time offset $Max(t_{off,n})$, then it is tried to exchange this device with a previous device in the classification list L1 (moved up in the list), and the time offset for this considered device is recalculated in step S5 (and for the exchanged device as well as shown in the examples below).

As for an example hereafter, devices #4 and #3 were already inserted in the classification list.

| Device # | Slot duration | max($t_{off,n}$) | $t_{off,n}$ |
|---|---|---|---|
| 4 | 2 | 3 | 0 |
| 3 | 4 | 4 | 2 |

Device #5 is the next to be inserted.

| Device # | Slot duration | max($t_{off,n}$) | $t_{off,n}$ |
|---|---|---|---|
| 4 | 2 | 3 | 0 |
| 3 | 4 | 4 | 2 |
| **5** | **2** | **5** | **6** |

As, for device #5, $t_{off,n}$ is greater than max($t_{off,n}$), then new entry #5 is to be moved up, as shown below:

| Device # | Slot duration | max($t_{off,n}$) | $t_{off,n}$ |
|----------|---------------|------------------|-------------|
| 4 | 2 | 3 | 0 |
| 5 | 2 | 5 | 2 |
| 3 | 4 | 4 | 4 |

and $t_{off,n}$ are re-calculated for both devices #5 and #3.

Referring again to figure 4, step S5 is repeated and the considered device is placed upper in the list L1 until its time offset $t_{off,n}$ becomes higher or equal to its maximum supported time offset Max($t_{off,n}$). Then, the thus modified list (becoming list L2) is stored in a memory in step S6. The next "considered device" (at the head of the list) is picked again in step S3 and put at the end of the list. The process is performed again until all the "considered devices" of the list (at its head) could have been placed at a correct position of the list in step S5. This is the aim of test S7, which is performed with an incrementing of a device index j until j = n, with n the number of devices in set S, (i.e. devices for which a timeslot is allocated in the next super-frame).

Then, in step S12, the beacon can be broadcast, according to the data contented in list L2 with finally:

- The order of the devices to be allocated with a timeslot within the super-frame following the beacon defined in step S12, and especially
- The time offset these devices should wait for before having their dedicated timeslot.

In a particular optional embodiment described hereafter and drawn in dashed lines in figure 4, energy bursts can be provided to load the devices batteries and energy burst scheduling can be implemented by the cell controller further to the method described above with reference to figure 4. In some cases indeed, it may not be possible to satisfy requests for timeslots of every device, and some energy bursts should be scheduled to increase the level of energy before the beginning of the super-frame in order to increase the energy $E_0$ value of some wireless devices.

Consequently, in that optional embodiment, it is proposed to modify the super-frame building algorithm in order to determine the minimum level of additional energy that shall be scheduled in order to fulfil the requirements of every wireless device.

The maximum energy that can be scheduled inside the super-frame n is equal to $P_{s,Tx} * T_s$ where $P_s$ is the transmitted power of the energy burst, and $T_s$ the burst duration.

The received power in device n is equal to $P_{s,Rx} = P_{s,Tx} * G_{s,n} * C_{s,n}$ with G the gain and C the power conversion efficiency ratio. Consequently, the received energy of device n is equal to:

$$E_{s,n}(t_s) = t_s * P_{s,Tx} * G_{s,n} * C_{s,n}$$

with $t_s < T_s$

The algorithm exposed in figure 4 can be slightly modified and enhanced in order to determine further the minimum level of additional energy that shall be scheduled.

Therefore, referring again to figure 4, when a classification list has been established in step S6, the missing energy $E_{miss,n}$ is evaluated so as to insert a device #n in an allocation table corresponding to an optimized classification list, with:

$$E_{miss,n} = [\, t_{off,n} - \max(t_{off,n}).\,] * P_A$$

It can be calculated then the minimum burst length to insert timeslot of device #n at the given position in the super-frame:

$$t_s = [\, t_{off,n} - \max(t_{off,n})\,] * P_A / (P_{s,Tx} * G_{s,n} * C_{s,n})$$

If that value is lower than $T_s$ (i.e. the maximum duration of energy burst), then the timeslot is inserted in the allocation table.

Then, in order to minimize the energy burst duration, the lowest $t_s$ value is selected among the different insertion possibilities, as presented in the examples below.

Here, starting from the same example table below, a timeslot for device #5 is to be added at the end of the table.

| Device # | Slot duration | max($t_{off,n}$). | $t_{off,n}$ |
|---|---|---|---|
| 4 | 2 | 3 | 0 |
| 3 | 4 | 4 | 2 |

Unfortunately, its time offset is greater than the maximum supported value. The duration of the requested energy burst to provide the missing energy is equal to 10ms for example.

| Device # | Slot duration | max($t_{off,n}$). | $t_{off,n}$ | Requested duration of energy burst |
|---|---|---|---|---|
| 4 | 2 | 3 | 0 | 0 |
| 3 | 4 | 4 | 2 | 0 |
| 5 | 3 | 5 | 6 | 10 |

Trying to move up the entry, the acceptance condition is still not fulfilled because putting timeslot for device #3 at the end implies a time offset greater than the maximum supported value.

However, the duration of the requested energy burst to provide the missing energy is equal to 8ms, as shown below, which is lower than the previous situation.

| Device # | Slot duration | max($t_{off,n}$). | $T_{off,n}$ | Requested duration of energy burst |
|---|---|---|---|---|
| 4 | 2 | 3 | 0 | 0 |
| 5 | 3 | 5 | 2 | 0 |
| 3 | 4 | 4 | 5 | 8 |

Consequently, this solution is applied as allocation table.

Referring then to figure 4 again, after step S6 and the definition of an updated list L2, requested duration of energy burst RDEB can be determined for the "considered device" before applying list L2 definitively. More particularly, before moving one "considered device n" up in the list, its requested duration of energy burst RDEB/n is determined is step S7. Furthermore, in step S8, the requested duration of energy burst RDEB/L of the last device #L of the list L2 is also calculated. In step S9, the requested durations of energy burst RDEB/n and RDEB/L are compared and as long as the requested duration of energy burst of the considered device RDEB/n is lower than or equal to the one of the last device in the list RDEB/L, than list L2 can definitely updated, stored in memory in step S6, and the beacon to be broadcast can be based on that list (arrow N from test S9). Otherwise (arrow Y from test S9), the list L2 is not updated and the process goes back to the previous version of list L2 in step S10 (with the previous position of the "considered device"). This non-updated list L2 is stored in memory so as to build the beacon to broadcast on its basis. It should be noted here that the central controller can further schedule then the requested durations of energy burst to provide and calculated thus successively for any "considered device" (or eventually for the last device of the list if step S10 is to be implemented).

The proposed invention can be deployed in IoT communication system for home or office or facilities or factory automation environment. It is compatible with ultra low-powered devices powered by small batteries or energy harvesting system. It can also be advantageously to deploy completely wireless sensors or devices in some specific environment that does not support wires, or to reduce designing/manufacturing/maintenance costs.

In the example shown in figure 5, a communication system according to the invention comprises one or several devices D#0, D#1, ... , D#n, communicating with one cell controller CC according to the invention and comprising a processing circuit configured for performing the method as described above for example with reference to figure 4. That processing circuit may comprise for example:

- a communication interface COM,
- connected to a processor PROC,
- and a memory MEM that can store, *inter alia,* computer program instructions to perform the method when such instructions are read by the processor PROC.

**Claims**

1. A method implemented by computer means for scheduling at least data communication in a system comprising:

   - communicating devices (D#0, D#1, ... , D#n), each device having a power battery and being configured for:

     o awaking in view to receive/transmit data within a predefined timeslot dedicated to said each device, and
     o then going to a sleep mode so as to save battery power,

   - and a cell controller (CC) being configured for transmitting repetitively a beacon to the communicating devices to announce to the devices whether future timeslots are intended or not to be allocated to said devices, and eventually moments when said future timeslots are scheduled to be allocated,

   wherein each of said devices is further configured for waking up and being active to receive the beacon, and then:

   - go to a sleep mode if no dedicated timeslot is available for said device before a next beacon, and
   - in the event when a dedicated timeslot is available for said device before a next beacon:

     ∘ stay active to use said dedicated timeslot, or
     ∘ go to a sleep mode until the moment when the dedicated timeslot is to be allocated,

   **characterized in that** the cell controller, before sending a current beacon:

     a) calculates, for each device intended to have a dedicated timeslot indicated in said current beacon, a maximum time offset supported by the device, which takes into account the energy consumption due to go-to-sleep and wake-up phases of the device until the moment when the device can use its dedicated timeslot,
     b) ranks and stores in a memory a first list of devices intended to have a dedicated timeslot indicated in the current beacon, according to their maximum supported time offset the last device (D#n) of the list having the higher maximum supported time offset,
     c) picks a considered device which is at the head of said first list and inserts it at the end of said first list, and calculates, at least for said considered device, a time offset between a moment when said current beacon is scheduled to be transmitted and the moment when the timeslot dedicated to the considered device is to be allocated,
     d) determines, at least for said considered device, whether the time offset is greater than the maximum supported time offset of the considered device, and if yes:

i. moves said considered device (D#n) by one position in the first list,

ii. determines a new time offset for said considered device, and repeats method step d) until the time offset is not greater than the maximum supported time offset of the considered device,

e) stores in a memory a second list of devices comprising said considered device having a new list position and said new time offset and modifies said current beacon according to the second list so as to allocate at least a dedicated timeslot to said considered device at said new time offset.

**2.** The method of claim 1, wherein the cell controller:

- repeats method steps c) and d), the second list of method step d) becoming the first list of method step c), until the second list does not comprise any device for which the time offset is greater than the maximum supported time offset,

- and updates in method step e) the current beacon according to the second list so as to allocate dedicated timeslots to said devices of the second list at respective updated time offsets.

**3.** The method according to anyone of claims 1 and 2, wherein the maximum supported time offset for a device, noted $Max(t_{off,n})$ in the following formula, is given by:

$$Max(t_{off,n}) = (E_{0,n} - E_{sf,n}(0)) / P_A,$$

where:

- $E_{0,n}$ is a sensed level of available energy for the device before the start of the beacon broadcast,
- $E_{sf,n}(0)$ is an estimated level of consumed energy by the device to:

  - wake up,
  - receive the beacon,
  - receive and/or transmit data during the dedicated timeslot, and
  - go then to sleep until the next beacon,

- and $P_A$ is a consumed energy during active phases.

**4.** The method of claim 3, wherein the estimated level of consumed energy by the device is given by:

$$E_{sf,n}(0) = P_{Rx}*(T_{Beacon} + T_{Rx,n}) + P_{Tx}*T_{Tx,n} + P_A*(T_{GS})$$

Where:

- $P_{Rx}$ is the power consumption during the reception phase
- $P_{Tx}$ is the power consumption during the transmission phase
- $T_{Beacon}$ is the duration of the beacon
- $T_{Rx,n}$ is the duration of possible data reception by the device during its dedicated timeslot
- $T_{Tx,n}$ is the duration of possible data transmission by the device during its dedicated timeslot
- $T_{GS}$ is the time taken by the device to go to sleep and corresponds to a fixed duration.

**5.** The method of claim 4, wherein a time $T_{Dec}$ taken by the device to decode the beacon is further taken into account and wherein the estimated level of consumed energy by the device is given by:

$$E_{sf,n}(0) = P_{Rx}*(T_{Beacon} + T_{Rx,n}) + P_{Tx}*T_{Tx,n} + P_A*(T_{Dec} + T_{GS})$$

**6.** The method according to anyone of claims 4 and 5, wherein the cell controller is configured to take into account, at least when allocating a new time offset $t_{off,n}$, an extra energy cost due to insertion of a sleeping period between the beacon broadcast and the moment when the device receives its dedicated timeslot, said extra energy cost being estimated by:

$P_A{}^*(T_{GS}+T_{WU}+T_{PreTS} - t_{off,n})$ with $t_{off,n} < T_{GS}+T_{WU}+T_{PreTS}$, and where:

- $T_{WU}$ is a time taken by the device to wake up and corresponds to a fixed duration,
- $T_{PreTS}$ is an optional time margin taken by the device before starting to use the timeslot and corresponds to a fixed duration.

**7.** The method according to claim 6, wherein the cell controller is configured to calculate further an estimated energy consumed by the device according to its time offset $t_{off,n}$:

$$E_{sf,n}(t_{off,n})= P_{Rx}{}^*(T_{Beacon} +T_{Rx,n})+ P_{Tx}{}^*T_{Tx,n} + P_A{}^*(T_{Dec} + T_{GS}) +P_A * \min(t_{off,n} , T_{GS}+T_{WU}+T_{PreTS})$$

$$E_{sf,n}(0) + P_A * \min(t_{off,n} , T_{GS}+T_{WU}+T_{PreTS})$$

with

$$E_{sf,n}(0) = P_{Rx}{}^*(T_{Beacon} +T_{Rx,n})+ P_{Tx}{}^*T_{Tx,n} + P_A{}^*(T_{Dec} + T_{GS})$$

**8.** The method according to anyone of the precedent claims, wherein the cell controller is configured further to schedule energy burst transmissions to devices needing an energy battery load, and wherein the cell controller:

* performs for said considered device of method step d):

- a calculation of a first requested duration of energy burst so that the considered device (D#n) is able to use the timeslot scheduled at time offset, and
- a determination of whether the time offset is greater than the maximum supported time offset of the considered device, and if yes, moving said considered device (D#n) upper in the first list, and determining a new time offset for said considered device, and storing in a memory the second list of devices comprising said considered device having a new list position and said new time offset,

* performs for the last device of the second list:

- a calculation of a second requested duration of energy burst so that said last device is able to use a timeslot scheduled at a time offset defined according to the second list,

* and:

- if the first requested duration of energy burst is higher than or equal to the second requested duration of energy burst, updates the current beacon according to the second list,
- or uses the first list otherwise.

**9.** The method of claim 8, wherein the cell controller further updates the scheduled duration of energy burst which is allocated:

- to the considered device if the first list is used, or
- to the last device if the second list is used.

**10.** A cell controller comprising a processing circuit configured to perform the method as claimed in anyone of the preceding claims.

**11.** A computer program comprising instructions which, when the program is executed by a processor, cause the processor to carry out the method as claimed in anyone of the claims 1 to 9.

**Patentansprüche**

1. Verfahren, das durch eine Computereinrichtung implementiert wird, um wenigstens die Datenkommunikation in einem System zeitlich zu planen, das aufweist:

   - Kommunikationsvorrichtungen (D#0, D#1, ..., D#n), wobei jede Vorrichtung eine Leistungsbatterie hat und konfiguriert ist, um:

     • im Hinblick auf das Senden/Übertragen von Daten in einem vordefinierten Zeitschlitz, der für jede Vorrichtung bestimmt ist, zu erwachen, und
     • dann in einen Schlafmodus einzutreten, um Batterieleistung zu sparen,

   - und eine Zellensteuerung (CC), die konfiguriert ist, um wiederholt ein Beacon an die Kommunikationsvorrichtungen zu übertragen, um den Vorrichtungen bekanntzugeben, ob geplant ist, diesen Vorrichtungen zukünftige Zeitschlitze zuzuweisen oder nicht, und schließlich Zeitpunkte, wann die zukünftigen Zeitschlitze für die Zuweisung geplant sind, bekanntzugeben,

   wobei jede dieser Vorrichtungen ferner konfiguriert ist, um aufzuwachen und aktiv zu sein, um das Beacon zu empfangen und dann:

   - in einen Schlafmodus einzutreten, wenn kein bestimmter Zeitschlitz für diese Vorrichtung vor einem nächsten Beacon verfügbar ist, und
   - in dem Fall, wenn ein bestimmter Zeitschlitz für die Vorrichtung vor dem nächsten Beacon verfügbar ist:

     • aktiv zu bleiben, um den bestimmten Zeitschlitz zu nutzen, oder
     • bis zu dem Zeitpunkt, wenn der bestimmte Zeitschlitz zugewiesen werden soll, in einen Schlafmodus einzutreten,

   **dadurch gekennzeichnet, dass** die Zellensteuerung vor dem Senden eines aktuellen Beacons:

   a) für jede Vorrichtung, die einen in dem aktuellen Beacon angezeigten Zeitschlitz haben soll, einen maximalen von der Vorrichtung unterstützten Zeitversatz zu berechnen, welcher den Energieverbrauch aufgrund von Einschlaf- und Aufwachphasen der Vorrichtung, bis zu dem Zeitpunkt, zu dem die Vorrichtung ihren bestimmten Zeitschlitz nutzen kann, berechnet,
   b) eine erste Liste von Vorrichtungen, die dazu gedacht sind, einen in dem aktuellen Beacon angezeigten bestimmten Zeitschlitz zu haben, gemäß ihrem maximalen unterstützten Zeitversatz in einem Speicher ordnet und speichert, wobei die letzte Vorrichtung (D#n) der Liste den höheren maximalen unterstützten Zeitversatz hat,
   c) eine betrachtete Vorrichtung, die am Anfang der ersten Liste ist, nimmt und sie an dem Ende der ersten Liste einfügt und wenigstens für die betrachtete Vorrichtung einen Zeitversatz zwischen einem Zeitpunkt, zu dem die Übertragung des aktuellen Beacons zeitlich geplant ist, und dem Zeitpunkt, zu dem der für die betrachtete Vorrichtung bestimmte Zeitschlitz zugewiesen werden soll, berechnet,
   d) wenigstens für die betrachtete Vorrichtung bestimmt, ob der Zeitversatz größer als der maximal unterstützte Zeitversatz der betrachteten Vorrichtung ist, und falls ja:

     i. die betrachtete Vorrichtung (D#n) um eine Position in der ersten Liste verschiebt,
     ii. einen neuen Zeitversatz für die betrachtete Vorrichtung bestimmt und den Verfahrensschritt d) wiederholt, bis der Zeitversatz nicht größer als der maximal unterstützte Zeitversatz der betrachteten Vorrichtung ist,

   e) in einem Speicher eine zweite Liste von Vorrichtungen speichert, welche die betrachtete Vorrichtung mit einer neuen Listenposition und dem neuen Zeitversatz aufweist, und das aktuelle Beacon gemäß der zweiten Liste modifiziert, um wenigstens einen bestimmten Zeitschlitz mit dem neuen Zeitversatz an die betrachtete Vorrichtung zuzuweisen.

2. Verfahren nach Anspruch 1, wobei die Zellensteuerung:

   - die Verfahrensschritte c) und d) wiederholt, wobei die zweite Liste des Verfahrensschritts d) die erste Liste des Verfahrensschritts c) wird, bis die zweite Liste keine Vorrichtung aufweist, für welche der Zeitversatz größer als der maximale unterstützte Zeitversatz ist,
- und das aktuelle Beacon in dem Verfahrensschritt e) gemäß der zweiten Liste aktualisiert, um mit jeweiligen aktualisierten Zeitversätzen bestimmte Zeitschlitze an die Vorrichtungen der zweiten Liste zuzuweisen.

3. Verfahren nach einem der Ansprüche 1 und 2, wobei der maximale unterstützte Zeitversatz für eine Vorrichtung, der in der folgenden Formel mit $Max(t_{off,n})$ bezeichnet ist, gegeben ist durch:

$$Max(t_{off,n}) = (E_{0,n} - E_{sf,n}(0))/P_A,$$

wobei:

- $E_{0,n}$ ein gemessener verfügbarer Energiepegel für die Vorrichtung vor dem Start der Beacon-Rundfunksendung ist,
- $E_{sf,n}(0)$ ein geschätzter Pegel der durch die Vorrichtung verbrauchten Energie ist, um:

  - aufzuwachen,
  - das Beacon zu empfangen,
  - während des bestimmten Zeitschlitzes Daten zu empfangen und/oder zu übertragen, und
  - dann bis zu dem nächsten Beacon einzuschlafen,

- und $P_A$ eine während aktiven Phasen verbrauchte Energie ist.

4. Verfahren nach Anspruch 3, wobei der geschätzte Pegel der von der Vorrichtung verbrauchten Energie gegeben ist durch:

$$E_{sf,n}(0) = P_{Rx}*(T_{Beacon} + T_{Rx,n}) + P_{Tx}*T_{Tx,n} + P_A*(T_{GS})$$

wobei:

- $P_{Rx}$ der Leistungsverbrauch während der Empfangsphase ist,
- $P_{Tx}$ der Leistungsverbrauch während der Übertragungsphase ist,
- $T_{Beacon}$ die Dauer des Beacons ist,
- $T_{Rx,n}$ die Dauer des möglichen Datenempfangs durch die Vorrichtung während ihres bestimmten Zeitschlitzes ist,
- $T_{Tx,n}$ die Dauer der möglichen Datenübertragung durch die Vorrichtung während ihres bestimmten Zeitschlitzes ist,
- $T_{GS}$ die Zeit ist, welche die Vorrichtung zum Einschlafen benötigt und einer festen Dauer entspricht.

5. Verfahren nach Anspruch 4, wobei ferner eine Zeit $T_{Dec}$, welche die Vorrichtung benötigt, um das Beacon zu dekodieren, berücksichtigt wird und wobei der geschätzte Pegel der durch die Vorrichtung verbrauchten Energie gegeben ist durch:

$$E_{sf,n}(0) = P_{Rx}*(T_{Beacon} + T_{Rx,n}) + P_{Tx}*T_{Tx,n} + P_A*(T_{Dec} + T_{GS}).$$

6. Verfahren nach einem der Ansprüche 4 und 5, wobei die Zellensteuerung konfiguriert ist, um wenigstens, wenn ein neuer Zeitversatz $t_{off,n}$ zugewiesen wird, einen zusätzlichen Energieaufwand aufgrund des Einfügens einer Schlafzeitspanne zwischen der Beacon-Rundfunksendung und dem Zeitpunkt, zu dem die Vorrichtung ihren bestimmten Zeitschlitz empfängt, zu berücksichtigen, wobei der zusätzliche Energieaufwand geschätzt wird durch:
$PA*(T_{GS} + T_{WU} + T_{PreTS} - t_{off,n})$ wobei $t_{off,n} < T_{GS} + T_{WU} + T_{PreTS}$ und wobei

- $T_{WU}$ eine Zeit ist, welche die Vorrichtung zum Aufwachen benötigt und einer festen Dauer entspricht,
- $T_{PreTS}$ ein optionaler zeitlicher Spielraum ist, den die Vorrichtung braucht, bevor sie beginnt, den Zeitschlitz zu verwenden, und einer festen Dauer entspricht.

7. Verfahren nach Anspruch 6, wobei die Zellensteuerung konfiguriert ist, um ferner einen geschätzten Energieverbrauch durch die Vorrichtung gemäß ihrem Zeitversatz $t_{off,n}$ zu berechnen:

$$E_{sf,n}(t_{off,n}) = P_{Rx}*(T_{Beacon}+T_{Rx,n}) + P_{Tx}*T_{Tx,n} + P_A*(T_{Dec}+T_{GS}) + P_A* \min(t_{off,n}, T_{GS}+T_{WU}+T_{PreTS})$$

$$E_{sf,n}(0) + P_A* \min(t_{off,n}, T_{GS}+T_{WU}+T_{PreTS})$$

wobei

$$E_{sf,n}(0) = P_{Rx}*(T_{Beacon} + T_{Rx,n}) + P_{Tx}*T_{Tx,n} + P_A*(T_{Dec} + T_{GS}).$$

8. Verfahren nach einem der vorhergehenden Ansprüche, wobei die Zellensteuerung ferner konfiguriert ist, um Energieburstübertragungen an Vorrichtungen, die eine Batterieenergieaufladung benötigen, zeitlich zu planen, und wobei die Zellensteuerung:

   * für die betrachtete Vorrichtung des Verfahrensschritts d) durchführt:

      - eine Berechnung einer ersten angeforderten Dauer des Energiebursts, so dass die betrachtete Vorrichtung (D#n) fähig ist, den mit dem Zeitversatz zeitlich geplanten Zeitschlitz zu verwenden, und
      - eine Bestimmung, ob der Zeitversatz größer als der maximale unterstützte Zeitversatz der betrachteten Vorrichtung ist, und falls ja, Höherschieben der betrachteten Vorrichtung (D#n) in der ersten Liste und Bestimmen eines neuen Zeitversatzes für die betrachtete Vorrichtung und Speichern der zweiten Liste von Vorrichtungen, welche die betrachtete Vorrichtung mit einer neuen Listenposition und dem neuen Zeitversatz aufweist, in einem Speicher,

   * für die letzte Vorrichtung der zweiten Liste durchführt:

      eine Berechnung einer zweiten angeforderten Dauer des Energiebursts, so dass die letzte Vorrichtung fähig ist, einen Zeitschlitz zu nutzen, der mit einem gemäß der zweiten Liste definierten Zeitversatz zeitlich geplant ist,

   * und

      - das aktuelle Beacon gemäß der zweiten Liste aktualisiert, wenn die erste angeforderte Dauer des Energiebursts größer oder gleich der zweiten angeforderten Dauer des Energiebursts ist,
      - oder ansonsten die erste Liste verwendet.

9. Verfahren nach Anspruch 8, wobei die Zellensteuerung ferner die zeitlich geplante Dauer des Energiebursts aktualisiert, der zugewiesen wird:

   - der betrachteten Vorrichtung, wenn die erste Liste verwendet wird, oder
   - der letzten Vorrichtung, wenn die zweite Liste verwendet wird.

10. Zellensteuerung, die eine Verarbeitungsschaltung aufweist, die konfiguriert ist, um das Verfahren nach einem der vorhergehenden Ansprüche durchzuführen.

11. Computerprogramm, das Anweisungen aufweist, die, wenn das Programm durch einen Prozessor ausgeführt wird, bewirken, dass der Prozessor das Verfahren nach einem der Ansprüche 1 bis 9 ausführt.


**Revendications**

1. Procédé implémenté par des moyens d'ordinateurs pour planifier au moins une communication de données dans un système, comprenant :

- des dispositifs de communication (D#0, D#1, ..., D#n), chaque dispositif ayant une batterie électrique et étant configuré pour :

⚬ se réveiller en vu de recevoir/de transmettre des données au sein d'un intervalle de temps prédéfini consacré à chaque dispositif, et
⚬ puis se mettre dans un mode veille afin d'économiser l'énergie de batterie,

- et une unité de commande de cellule (CC) configurée pour transmettre de façon répétée une balise aux dispositifs de communication pour annoncer aux dispositifs si des intervalles de temps futurs sont, ou non, destinés à être attribués auxdits dispositifs, et éventuellement des moments auxquels il est planifié d'attribuer lesdits intervalles de temps futurs,

dans lequel chacun desdits dispositifs est en outre configuré pour se réveiller et être actif pour recevoir la balise, et puis :

- se mettre dans un mode veille si aucun intervalle de temps consacré n'est disponible pour ledit dispositif avant une balise suivante, et
- au cas où un intervalle de temps consacré est disponible pour ledit dispositif avant une balise suivante :

⚬ rester actif pour utiliser ledit intervalle de temps consacré, ou
⚬ se mettre dans un mode veille jusqu'au moment auquel l'intervalle de temps consacré doit être attribué,

**caractérisé en ce que** l'unité de commande de cellule, avant d'envoyer une balise courante :

a) calcule, pour chaque dispositif destiné à avoir un intervalle de temps consacré indiqué dans ladite balise courante, un décalage de temps maximum pris en charge par le dispositif, qui prend en compte la consommation d'énergie due à des phases de mise en veille et de réveil du dispositif jusqu'au moment auquel le dispositif peut utiliser son intervalle de temps consacré,
b) classe et stocke, dans une mémoire, une première liste de dispositifs destinés à avoir un intervalle de temps consacré indiqué dans la balise courante, selon leur décalage de temps maximum pris en charge, le dernier dispositif (D#n) de la liste ayant le décalage de temps maximum pris en charge le plus élevé,
c) prend un dispositif considéré qui est à la tête de ladite première liste et l'insère à la fin de ladite première liste, et calcule, au moins pour ledit dispositif considéré, un décalage de temps entre un moment auquel il est planifié de transmettre ladite balise courante et le moment auquel l'intervalle de temps consacré au dispositif considéré doit être attribué,
d) détermine, au moins pour ledit dispositif considéré, si le décalage de temps est supérieur au décalage de temps maximum pris en charge du dispositif considéré, et si oui :

i. déplace ledit dispositif considéré (D#n) d'une position dans la première liste,
ii. détermine un nouveau décalage de temps pour ledit dispositif considéré, et répète l'étape de procédé d) jusqu'à ce que le décalage de temps ne soit pas supérieur au décalage de temps maximum pris en charge du dispositif considéré,

e) stocke, dans une mémoire, une seconde liste de dispositifs comprenant ledit dispositif considéré ayant une nouvelle position de liste et ledit nouveau décalage de temps et modifie ladite balise courante selon la seconde liste afin d'attribuer au moins un intervalle de temps consacré audit dispositif considéré audit nouveau décalage de temps.

2. Procédé selon la revendication 1, dans lequel l'unité de commande de cellule :

- répète les étapes de procédé c) et d), la seconde liste de l'étape de procédé d) devenant la première liste de l'étape de procédé c), jusqu'à ce que la seconde liste ne comprenne aucun dispositif pour lequel le décalage de temps est supérieur au décalage de temps maximum pris en charge,
- et met à jour, dans l'étape de procédé e), la balise courante selon la seconde liste afin d'attribuer des intervalles de temps consacrés auxdits dispositifs de la seconde liste à des décalages de temps mis à jour respectifs.

3. Procédé selon l'une quelconque des revendications 1 et 2, dans lequel le décalage de temps maximum pris en charge pour un dispositif, noté $Max(t_{off,n})$ dans la formule suivante, est donné par :

$$\text{Max}(t_{\text{off,n}}) = (E_{0,n} - E_{\text{sf,n}}(0))/P_A,$$

où :

- Eo,n est un niveau détecté d'énergie disponible pour le dispositif avant le commencement de la diffusion de balise,
- $E_{\text{sf,n}}(0)$ est un niveau estimé d'énergie consommée par le dispositif pour :
- se réveiller,
- recevoir la balise,
- recevoir et/ ou transmettre des données durant l'intervalle de temps consacré, et
- ensuite se mettre en veille jusqu'à la balise suivante,
- et $P_A$ est une énergie consommée durant des phases actives.

4.  Procédé selon la revendication 3, dans lequel le niveau estimé d'énergie consommée par le dispositif est donné par :

$$E_{\text{sf,n}}(0) = P_{\text{Rx}} * (T_{\text{Beacon}} + T_{\text{Rx,n}}) + P_{\text{Tx}} * T_{\text{x,n}} + P_A * (T_{\text{GS}})$$

où :

- $P_{\text{Rx}}$ est la consommation d'énergie durant la phase de réception,
- $P_{\text{Tx}}$ est la consommation d'énergie durant la phase de transmission,
- $T_{\text{Beacon}}$ est la durée de la balise,
- $T_{\text{Rx,n}}$ est la durée d'éventuelle réception de données par le dispositif durant son intervalle de temps consacré,
- $T_{\text{x,n}}$ est la durée d'éventuelle transmission de données par le dispositif durant son intervalle de temps consacré,
- $T_{\text{GS}}$ est le temps pris par le dispositif pour se mettre en veille et correspond à une durée fixe.

5.  Procédé selon la revendication 4, dans lequel un temps $T_{\text{Dec}}$ pris par le dispositif pour décoder la balise est en outre pris en compte et dans lequel le niveau estimé d'énergie consommée par le dispositif est donné par :

$$E_{\text{sf,n}}(0) = P_{\text{Rx}} * (T_{\text{Beacon}} + T_{\text{Rx,n}}) + P_{\text{Tx}} * T_{\text{Tx,n}} + P_A * (T_{\text{Dec}} + T_{\text{GS}})$$

6.  Procédé selon l'une quelconque des revendications 4 et 5, dans lequel l'unité de commande de cellule est configurée pour prendre en compte, au moins lors de l'attribution d'un nouveau décalage de temps $t_{\text{off,n}}$, un coût d'énergie supplémentaire dû à l'insertion d'une période de veille entre la diffusion de balise et le moment auquel le dispositif reçoit son intervalle de temps consacré, ledit coût d'énergie supplémentaire étant estimé par :
$P_A * (T_{\text{GS}} + T_{\text{WU}} + T_{\text{PreTS}} - t_{\text{off,n}})$ avec $t_{\text{off,n}} < T_{\text{GS}} + T_{\text{WU}} + T_{\text{PreTS}}$, et où :

- $T_{\text{WU}}$ est un temps pris par le dispositif pour se réveiller et correspond à une durée fixe,
- $T_{\text{PreTS}}$ est une marge de temps optionnelle prise par le dispositif avant de commencer à utiliser l'intervalle de temps et correspond à une durée fixe.

7.  Procédé selon la revendication 6, dans lequel l'unité de commande de cellule est configurée pour calculer en outre une énergie estimée consommée par le dispositif selon son décalage de temps $t_{\text{off,n}}$ :

$$E_{\text{sf,n}}(t_{\text{off,n}}) = P_{\text{Rx}} * (T_{\text{Beacon}} + T_{\text{Rx,n}}) + P_{\text{Tx}} * T_{\text{Tx,n}} + P_A * (T_{\text{Dec}} + T_{\text{GS}}) + P_A * \text{min}(t_{\text{off,n}},$$

$$T_{\text{GS}} + T_{\text{WU}} + T_{\text{PreTS}})$$

$$E_{\text{sf,n}}(0) + P_A * \text{min}(t_{\text{off,n}}, T_{\text{GS}} + T_{\text{WU}} + T_{\text{PreTS}})$$

avec

$$E_{\text{sf,n}}(0) = P_{\text{Rx}} * (T_{\text{Beacon}} + T_{\text{Rx,n}}) + P_{\text{Tx}} * T_{\text{Tx,n}} + P_A * (T_{\text{Dec}} + T_{\text{GS}})$$

8.  Procédé selon l'une quelconque des revendications précédente, dans lequel l'unité de commande de cellule est en outre configurée pour planifier des transmissions de salve d'énergie à des dispositifs ayant besoin d'une charge de batterie d'énergie, et dans lequel l'unité de commande de cellule :

    * réalise, pour ledit dispositif considéré de l'étape de procédé d) :

        - un calcul d'une première durée demandée de salve d'énergie, pour que le dispositif considéré (D#n) soit capable d'utiliser l'intervalle de temps planifié au décalage de temps, et
        - une détermination si le décalage de temps est supérieur au décalage de temps maximum pris en charge du dispositif considéré, et, si oui, le déplacement dudit dispositif considéré (D#n) plus haut dans la première liste, et la détermination d'un nouveau décalage de temps pour ledit dispositif considéré, et le stockage dans une mémoire de la seconde liste de dispositifs, comprenant ledit dispositif considéré ayant une nouvelle position de liste et ledit nouveau décalage de temps,

    * réalise pour le dernier dispositif de la seconde liste :

        - un calcul d'une seconde durée demandée de salve d'énergie pour que ledit dernier dispositif soit capable d'utiliser un intervalle de temps planifié à un décalage de temps défini selon la seconde liste,

    * et :

        - si la première durée demandée de salve d'énergie est supérieure ou égale à la seconde durée demandée de salve d'énergie, met à jour la balise courante selon la seconde liste,
        - ou utilise la première liste autrement.

9.  Procédé selon la revendication 8, dans lequel l'unité de commande de cellule met en outre à jour la durée planifiée de salve d'énergie qui est attribuée :

    - au dispositif considéré si la première liste est utilisée, ou
    - au dernier dispositif si la seconde liste est utilisée.

10. Unité de commande de cellule, comprenant un circuit de traitement configuré pour réaliser le procédé selon l'une quelconque des revendications précédentes.

11. Programme d'ordinateur comprenant des instructions qui, lorsque le programme est exécuté par un processeur, font en sorte que le processeur réalise le procédé selon l'une quelconque des revendications 1 à 9.

FIG. 1

FIG. 2

FIG. 3

EP 3 537 775 B1

FIG. 4

EP 3 537 775 B1

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014112405 A1
- US 2010097969 A1
- US 2011182248 A1